Europäisches Patentamt

European Patent Office

Office européen des brevets

(19)

(11) Publication number: **0 055 596**

A2

(12) **EUROPEAN PATENT APPLICATION**

(21) Application number: 81306064.7

(22) Date of filing: 22.12.81

(51) Int. Cl.³: **A 01 C 3/02**

(30) Priority: 30.12.80 IE 2730/80
19.03.81 IE 605/81
18.08.81 IE 1887/81

(43) Date of publication of application:
07.07.82 Bulletin 82/27

(84) Designated Contracting States:
AT BE CH DE FR GB IT LI LU NL SE

(71) Applicant: Monahan, Charles Joseph
Eyrecourt, Coolacurn
County Galway(IE)

(72) Inventor: Monahan, Charles Joseph
Eyrecourt, Coolacurn
County Galway(IE)

(74) Representative: Orchard, Oliver John
JOHN ORCHARD & CO. Staple Inn Buildings North High
Holborn
London WC1V 7PZ(GB)

(54) Slurry agitating apparatus.

(57) Slurry agitating apparatus comprising a jib (30) pivoted at one end to a frame (31) which is adapted to be pivotally connected to and supported by a prime mover (20).

The other end of the jib (30) supports a probe (10) which depends vertically therefrom. Mounted on the free end of the probe (10) is a slurry agitating device (12) which is operative-ly connected to the prime mover (20). The axis of rotation of the agitating device (12) is perpendicular to the probe (10). The construction is such that on pivotal movement of the jib (30), in response to pivotal movement of the frame (31), the probe (10) is vertically raised out of or lowered into a slurry reservoir through an access aperture.

Fig.1

EP 0 055 596 A2

- 1 -

## Slurry Agitating Apparatus

This invention relates to slurry agitating apparatus of the kind in which a support is adapted to be operatively connected to a prime mover, the support having a probe extending therefrom for movement into and out of a reservoir containing slurry and carrying a slurry agitating device also adapted to be operatively connected to the prime mover.

When farm animals such as cattle are housed over an extended period, it is necessary to provide a system for collecting and storing slurry. The slurry may conveniently be stored in a reservoir into which the slurry passes through slats in the floor of the cattle shed. The slurry may be emptied from the reservoir at the end of the extended period, which may be a winter of about 150 days, and spread over grassland to act as a manure. Thus the slurry reservoir must have a capacity large enough to hold all the slurry produced over the extended period.

If, however, the slurry is left undisturbed for a period longer than one month, it forms into three layers: a top layer of crusty fibrous material, an intermediate layer of water and a bottom layer of sediment. The top layer of crusty fibrous material can be difficult to break. To prevent the slurry from forming into such layers and in order to maintain the fluid in a homogenous even texture so that it can be removed from the reservoir by pumping, it is necessary to agitate the slurry on a regular basis. An example of a mechanical agitator is described in Irish Patent Specification No. 29414 (Fleming) and consists of a tractor mounted elongate probe in the form of an encased rotatable spindle one end of which is provided with a slurry agitating device in the form of a propeller which is rotatable about the axis of the spindle. The other end of the spindle is connected to the power take off of the tractor.

One disadvantage of an agitator of the kind shown in Irish Patent Specification No. 29414 is that the probe must be inserted into the reservoir at an angle. As a result, the force of the rotating propeller is directed at an angle towards the floor of the reservoir.

A second disadvantage of the known slurry agitator is that because the agitator needs to be inserted into the reservoir at an angle the access apertures need to be so relatively large that an adult can fall into the reservoir through an access aperture.

A third disadvantage of the known slurry agitator is that it tends to agitate the slurry only in the vicinity of the propeller. Consequently a large reservoir must be provided with a significant number of access apertures and the slurry agitator must be transported to each of the access apertures. An object of the present invention is to provide slurry agitating apparatus which will mitigate the disadvantages referred to above.

According to the present invention there is provided a slurry agitating apparatus comprising a support adapted to be operatively connected to a prime mover, a probe extending from the support for movement into and out of a reservoir containing slurry, the probe carrying a slurry agitating device adapted to be operatively connected to the prime mover, the apparatus being characterised in that the axis of rotation of the agitating device is perpendicular to the probe and, when in its operative position, the probe is vertically disposed.

Advantageously, the support is a jib extending from and pivotal relative to the prime mover, the probe being pivotally connected to and depending from the jib, so that on pivotal movement of the jib the probe is lowered into or raised out of its operative position.

The jib itself is advantageously pivoted to a frame adapted to be pivotally supported by the prime mover, so that pivotal movement of the frame causes pivotal movement of the jib. The advantages offered by the invention are that the probe is vertically disposed when the apparatus is in operation, so that the axis of rotation of the agitating device is perpendicular to the probe, thereby enabling the slurry to be propelled in a direction parallel to the floor of the reservoir. Thus by raising or lowering the probe whilst in a vertical position the slurry can be agitated at more than one level. Furthermore, by virtue of the fact that the probe can be raised or lowered whilst in a vertical position, the probe can be lowered into the tank through an aperture which is very small as compared to conventional apertures used by the apparatus of the prior art. Thus the access points can be so relatively small that there is no danger of a human operater falling into the reservoir.

One way of carrying out the invention is hereinafter described in detail with reference to the accompanying drawings which illustrate one particular embodiment of the invention. In the drawings,

Figure 1 is a side view of the apparatus in a transport position;

Figure 2 is a side view of the apparatus in an alternative transport position;

Figure 3 is a side view of the apparatus in its raised position prior to its being lowered into its operative position,

Figure 4 is a front elevation corresponding to Figure 3;

Figure 5 is a perspective view showing the apparatus in its operative position; and

Figure 6 is a partly exploded perspective view showing a detail of Figure 5.

Referring to the drawings, the apparatus comprises a probe 10 pivotally connected to a support in the form of a jib 30 which is in turn connected to a frame 31 mounted on the three point linkage system of an agricultural tractor 20.

The probe 10 comprises an elongate casing 11, at one end of which is a rotatable spindle 2 located in a bearing 3 mounted in the casing 11. The spindle 2 supports externally of the casing an agitating device in the form of a propeller 12 and internally of the casing a sprocket wheel (not shown). At the other end of the casing is a rotatable spindle 4 mounted in bearings 5 and supporting internally of the casing a sprocket wheel (not shown). The two sprocket wheels are operatively connected by a chain drive (not shown). One end of the spindle 4 terminates in a universal joint 14 by means of which the spindle 4 is operatively connected to a drive-shaft 13 which may be driven by the power take-off shaft (not shown) of the tractor 20.

Each bearing 5 for spindle 4 is mounted in one of a pair of plates 25. Each of the plates 25 is provided with four slots 26 and associated studs 28 by means of which the plates may be secured to the casing 11. Associated with the plates 25 is an adjuster 29 which can be turned to raise or lower the plates and thereby to alter the tension in the chain drive.

The lower end of the casing has an abutment 16 which prevents the propeller 12 from contacting the floor of a slurry reservoir (not shown). Mounted on the upper end of the casing 11 is a box section 52 to which is pivotally connected an adjustable link 50. Also supported at the upper end of the casing are pivot connections 6, one at each side of the casing 11, by means of which the probe 10 is pivoted to the jib 30. An air pipe 60 is welded to the casing 11. The air pipe 60 is provided with a branch pipe 61. The lower end of the pipe 60 terminates adjacent the propeller 12 and the upper end of the branch pipe 61 terminates in the box section 52.

The jib 30 comprises a pair of mutually parallel, elongate arms 36. The forward ends of the arms 36 are pivoted to the probe 10, one arm at each side of the probe. A bracing member 46 connected between the arms 36 adjacent the other end thereof supports a drive-shaft element 13a for connection to both the drive-shaft 13 and the power take off shaft of the tractor 20, each of the connections being made by a universal joint 14. Also connected between the elongate arms 36 is a multipurpose assembly 47. The assembly 47 encloses a substantial part of the drive-shaft 13, strengthens the jib 30 and provides an apetured channel 48 into which adjustable links 49 and 50 may be pivotally connected.

The frame 31 for supporting the jib 30 on the tractor 20 has an inverted "V" shaped transverse member 65 providing, at its lower extremities a pair of U shaped pivot connection brackets 66 which together define a transverse pivotal axis for the jib. The transverse member 65 also supports a pivot connection 38 for a lever arm 40 which is pivoted intermediate its ends about an axis parallel to the pivotal axis of the jib. One end of the lever arm 40 is connected to the top link anchor point of the three point linkage of the tractor 20.

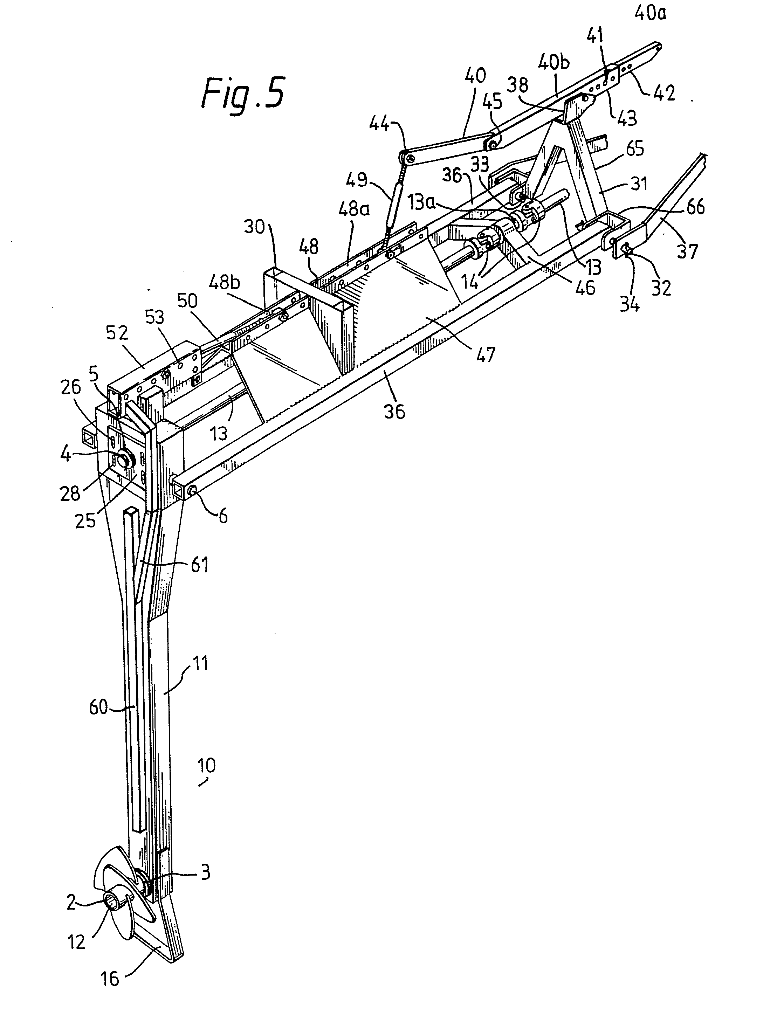

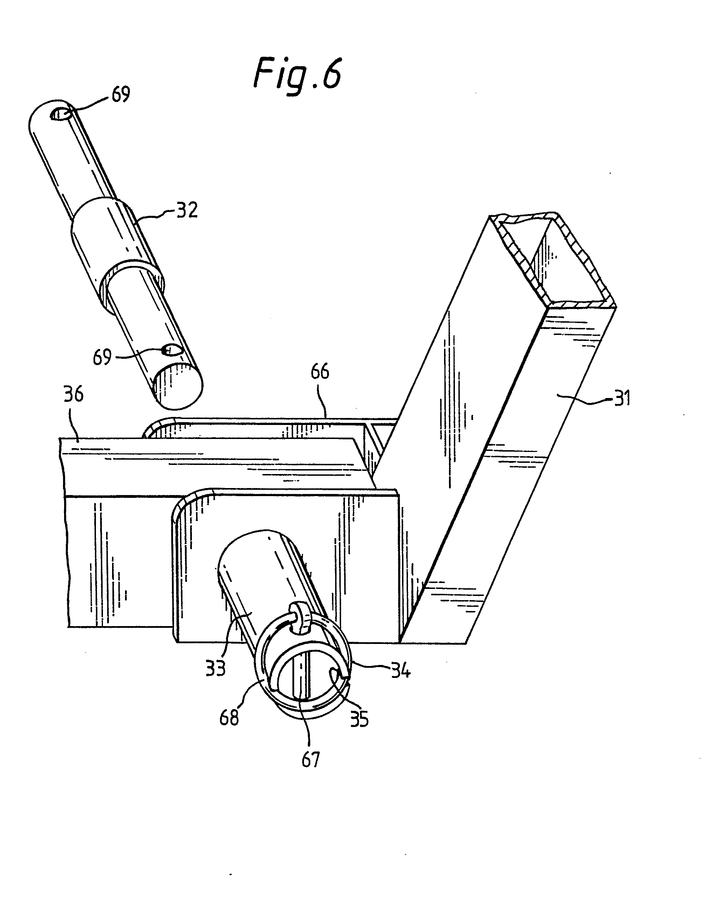

As shown particularly in Figures 5 and 6, the elongate arms 36 of the jib 30, and the tractor draft arms 37 are pivoted to the frame 31 by means of double ended pivot pins 32, one end of each of which engages in a sleeve 33 which is fixed to the inner limb of each U-shaped bracket 66. The pivot pins 32 are held in position by means of spring clips 34, the pins 36 of which pass through apertures 69 in the pins 32 and the sleeves 33 respectively. Each spring clip 34 is locked in position on the sleeve 33 by means of rings 68 which engages a notch 35.

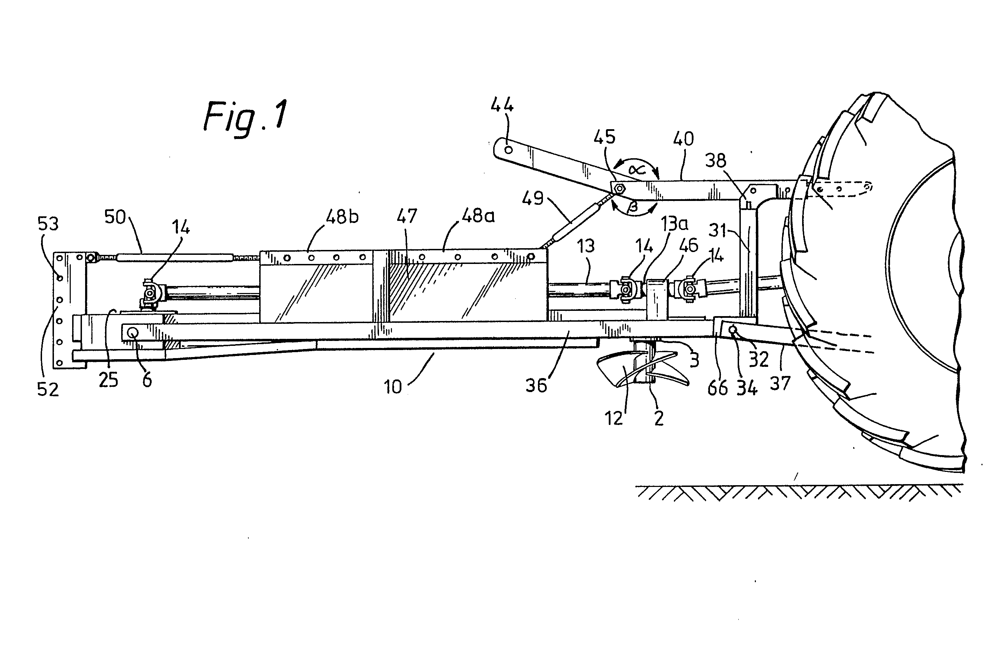

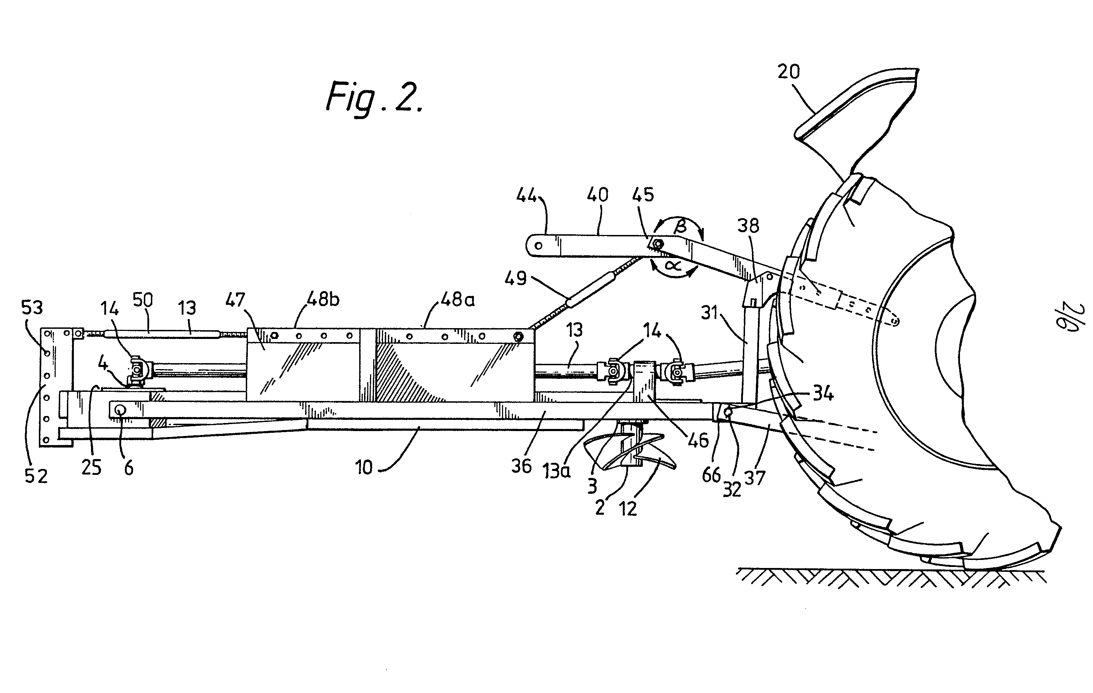

The forward end of the lever arm 40 is angled to form an obtuse angle α and a reflex angle β. In Figures 1,3 and 5, the lever arm 40 presents its reflex angle to the jib 30 whereas in Figure 2 the lever arm 40 presents its reflex angle to the jib. The rear end of the lever arm 40 is telescopic so that it can be extended or contracted in length depending on the type of agricultural tractor used. The length of the lever arm 40 is fixed by a pin 41 inserted through one of the series of holes 42 in the telescope section 40a and through one of the series of holes 43 in the main body 40b of the lever arm 40. A hole 44 is provided at the forward end, and a hole 45 is provided adjacent the position of the angle of the lever arm 40.

The channel 48 at the apex of the assembly 47 is provided towards its rearward end with a series of holes 48a and towards its forward end with a series of holes 48b. The adjustable link 49 is provided between either of holes 44 or 45, and one of the holes 48a. The adjustable link 49 is connected to hole 45 in the transport position of the apparatus and to hole 44 in the operative position of the apparatus. The adjustable link 50 is provided between one of the holes 48b and one of the series of holes 53 in the box section 52 on the upper end of the casing 11. The link 50 is fixed in position when the apparatus is in its operative position (see Figure 5.

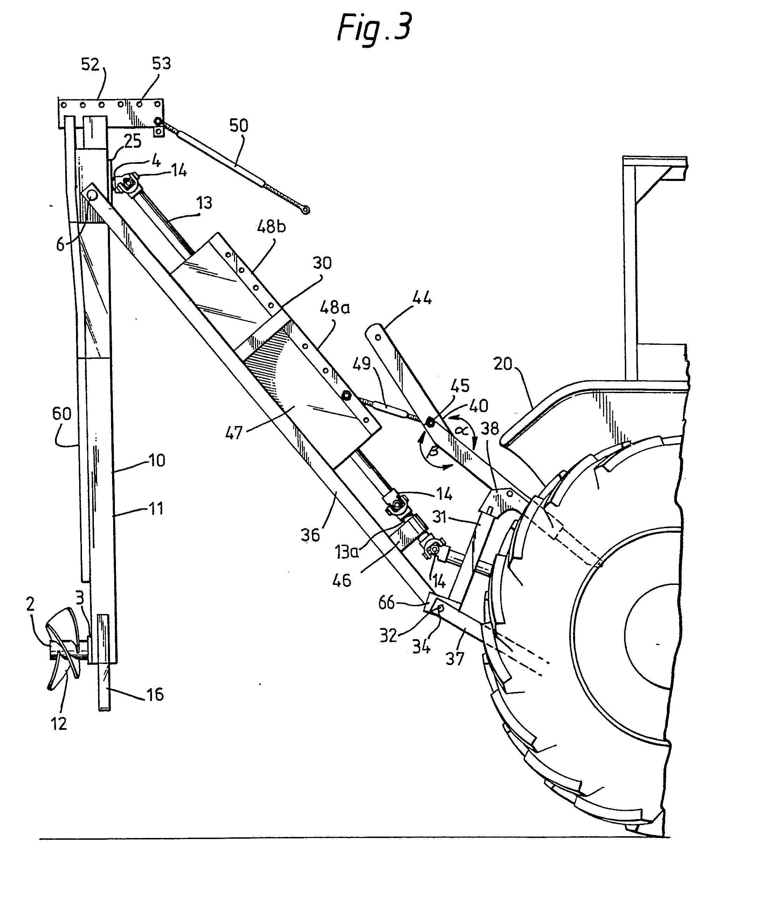

As shown in Figure 3 the air supply pipe 60 extends along the casing 11. The air supply pipe 60 and the branch pipe 61 enable air to be drawn into the slurry. The pipe 60 also serves to brace the probe 10. The lower end of the pipe 60 is open and the upper end is closed. The end of the branch pipe 61 may be opened or closed by means of a flap 62 located inside the box frame 52. The flap 62 is positioned by means of an offset hinge pin 63. The offset hinge pin 63 allows the flap to remain in the position which is selected, i.e. either open or closed. The flap 62 is placed in the open position when it is desired to draw air into the slurry. Air is drawn into the slurry by means of the rotating propeller 12. The presence of air in the slurry helps bacteria in the slurry to break down the organic solids. The addition of air in the manner described prevents the air from forming into large pockets or bubbles which just rise straight to the top of the slurry. Air would be supplied to slurry during periodic agitation. However, if a thick crust is on the slurry or if the slurry is being agitated prior to it being pumped from the reservoir, it is preferable to place the flap 62 in the closed position to prevent air from being drawn down the pipe 60. The "throwing power" or agitation effect of the propeller 12 is greater when air is not being drawn down the pipe 60.

The slurry apparatus may be connected to an agricultural tractor with the lever arm 40 in either of the positions as shown in Figures 1 and 2 of the drawings. It will be appreciated, however, that with the lever arm 40 in the position shown in Figure 2, the probe 10 may be lowered to a depth greater than the depth to which the probe may be lowered when the lever arm 40 is in the position shown in Figure 1. The apparatus may be transported with the lever arm 40 in either of the positions shown in Figures 1 and 2 but the position shown in Figure 1 is prepared for transport purposes, i.e. with the reflex angle of the lever arm presented to the jib 30.

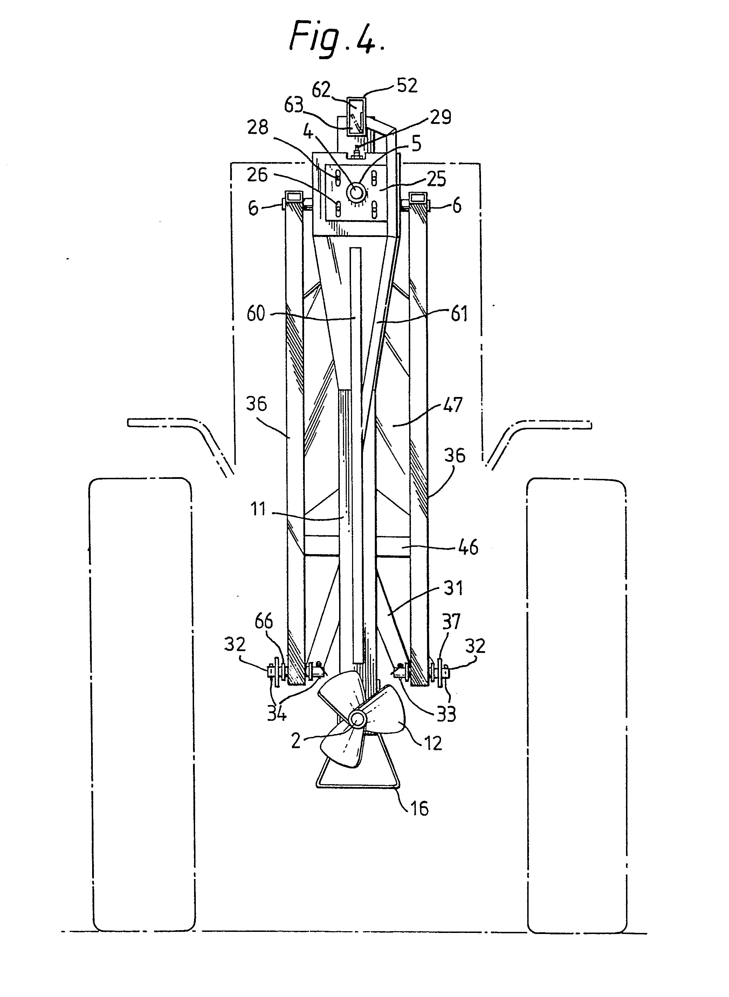

When it is desired to operate the apparatus, the draft arms 37 of the tractor 20 may be powered to raise the frame 31, and thereby cause the jib 30 to be pivoted upwardly about the frame. The adjustable link 50 may then be disconnected, to enable the probe 10 pivotally to depend from the forward end of the jib 30, as shown in Figures 3 and 4. From the position shown in Figure 3, the frame 31 may be lowered, thereby causing the jib 30 to pivot downwardly about the frame. Downward pivotal movement of the jib 30 results in the probe 10 being lowered, whilst the latter remains in a vertical position until the probe and jib are in the mutual relationship shown in Figure 5 in which the angle between the probe and the jib is approximately 90$^{\circ}$. The adjustable link 50 is then reconnected between the box section 52 and the assembly 47. It will be appreciated that the angle may be more or

less than 90$^{\circ}$ depending upon the inclination of the tractor approach to the reservoir, and the probe access to the reservoir. When in the operative position, the power take off shaft of the tractor may be operated to rotate the propeller 12 through the drive arrangement described above.

- 1 -

Claims:

1. Slurry agitating apparatus comprising a support (30,31) adapted to be operatively connected to a prime mover (20), a probe (10) extending from the support (30,31) for movement into and out of a reservoir containing slurry, the probe carrying a slurry agitating device (12) adapted to be operatively connected to the prime mover (20), the apparatus being characterised in that the axis of rotation of the agitating device (12) is perpendicular to the probe (10), and in its operative position, the probe (10) is vertically disposed.

2. Slurry agitating apparatus as claimed in Claim 1, characterised in that the support is a jib (30) pivoted to a frame (31) adapted to be pivotally connected to and supported by the prime mover (20), so that pivotal movement of the frame (31) causes pivotal movement of the jib (30), the probe (10) being pivotally connected to and depending from the jib (30), so that on pivotal movement of the jib (30), in response to pivotal movement of the frame (31), the probe (10) is lowered into or raised out of its operative position.

3. Slurry agitating apparatus as claimed in either of Claims 1 or 2, characterised in that the jib (30) carries a rotatable shaft (13) one end of which is adapted to be operatively connected to the prime mover (20) and the other end of which is operatively connected to a drive member in the pivoted end of the probe (10), the drive member being in turn operatively connected to a spindle (2) located at the free end of the probe and supporting the agitating device (12).

4.    Slurry agitating apparatus as claimed in Claim 3, characterised in that the jib 30 comprises a pair of mutually parallel elongate arms (36), the elongate arms (36) being secured together in spaced apart relationship by bracing members (46,47), the arms (36) at one end of the jib (30) being pivotally connected to the frame (31) and at the other end being pivotally connected to each side of the pivoted end of the probe (10).

5.    Slurry agitating apparatus as claimed in either of Claims 3 or 4, characterised in that the frame (31) includes a pair of pivot connections (66) to which the jib (30) is connected, the pivot connections (66) being spaced apart on an axis transverse to the axis of the rotatable shaft (13) and being adapted to be connected to pivot connections (37) on the prime mover (20), and a further pivot connection (38) located on the frame (31) centrally above said axis, the further pivot connection (38) supporting a lever arm (40) located perpendicular to said axis and connected intermediate its ends to said further pivot connection (38), one end of the lever arm (40) being pivotally connected by a link (49) to the jib (30) and the other end being adapted to be pivoted to a connection on the prime mover (20), the arrangement being such that when connected to the prime mover (20), the latter may be powered to pivotally raise or lower the frame (31), thereby causing the jib (30) to.be pivotally raised or lowered relative to the frame (31).

6.      Slurry agitating apparatus as claimed in Claim 5, characterised in that the end of the lever arm (40) which is linked to the jib (30) is angled and the lever arm (40) is invertible about its pivotal axis so that the lever arm (40) presents either an obtuse or reflex angle to the jib, the link (49) being pivotally connectable to both the lever arm (40) and jib (30).

7.      Slurry agitating apparatus as claimed in any one of the preceding claims 3 to 6 inclusive, characterised in that the probe (10) is hollow and supports adjacent its pivoted end a first spindle (4) which extends from the interior to the exterior of the probe, the first spindle (4) supporting interiorly of the probe a drive wheel and being connected exteriorly of the probe to the driveshaft (13), the free end of the probe also supporting a second spindle (2) which extends from the interior to the exterior of the probe, the second spindle interiorly of the probe also supporting a drive wheel and exteriorly of the probe supporting the agitating device (12), and drive means interiorly of the probe operatively connecting together the two drive wheels.

8.      Slurry agitating apparatus as claimed in any one of Claims 2 to 7 inclusive, characterised in that a link (50) is connectable between the probe (10) and the jib (30) in the operative position of the apparatus, or in a transport position in which the probe (10) can be secured substantially parallel to the jib (30).

9.    Slurry agitating apparatus as claimed in any one of the preceding claims, characterised in that the probe supports an air pipe (60), the exit for the pipe (60) being located behind the agitating device (12) so that the latter when operating in a reservoir of slurry, sucks air through the pipe (60) and into the slurry being agitated.

10.    Slurry agitating apparatus as claimed in any one of Claims 5 to 9 inclusive, characterised in that each of the pair of pivot connections between the jib and frame comprises a double ended pivot pin (32) supported in a U-shaped bracket (66), one end of the pin (32) being secured in a sleeve (33) on one limb of the bracket (66), and the other end of the pin on the remote side of the other limb being adapted to be pivotally connected by draft arms (37) to the prime mover.

Fig.1

Fig. 2.

Fig.3

# Fig.4.

5/6

0055596

Fig.5

Fig.6